Europäisches Patentamt

European Patent Office

Office européen des brevets

(11) Veröffentlichungsnummer: **0 414 957 A1**

## (12) EUROPÄISCHE PATENTANMELDUNG

(21) Anmeldenummer: **89118001.0**

(51) Int. Cl.⁵: **C02F 3/08**

(22) Anmeldetag: **28.09.89**

(30) Priorität: **28.08.89**

(43) Veröffentlichungstag der Anmeldung:
**06.03.91 Patentblatt 91/10**

(84) Benannte Vertragsstaaten:
**AT BE CH DE ES FR GB GR IT LI LU NL SE**

(71) Anmelder: **Tatura, Joachim, Dipl.-Ing.**
**An der Lünette 3**
**W-5170 Jülich(DE)**

Anmelder: **Zeus, Leo, Dr. jur.**
**Hebbelstrasse 81**
**W-5000 Köln 51(DE)**

Anmelder: **Schuch, Hans-Willi**
**Parkstrasse 26**
**W-5060 Bergisch-Gladbach(DE)**

Anmelder: **Schumacher, Karl Jürgen, Dr.**
**Mauritiussteinweg 90**
**W-5000 Köln 1(DE)**

Anmelder: **Krettek, Otmar, Prof. Dr.-Ing.**
**Seffenter Weg**
**W-5100 Aachen(DE)**

Anmelder: **Lux, Ewald, Dipl.-Ing.**
**Ingeborg-Bachmann-Strasse 5**
**W-4000 Düsseldorf(DE)**

Anmelder: **Beyer, Wolf G., Dipl.-Ing.**
**Hildegardisstrasse 3**
**W-4044 Kaarst(DE)**

Anmelder: **Lentzen, Manfred**
**Eifelstrasse 13**
**W-5100 Aachen(DE)**

Anmelder: **Meyer-Plate, Ingolf, Dipl.-Ing.**
**Xantener Strasse 149**
**W-5000 Köln 60(DE)**

(72) Erfinder: **Tatura, Joachim, Dipl.-Ing.**
**An der Lünette 3**
**W-5170 Jülich(DE)**

(54) **Hydrodynamischer Tauchkammern-Bioreaktor.**

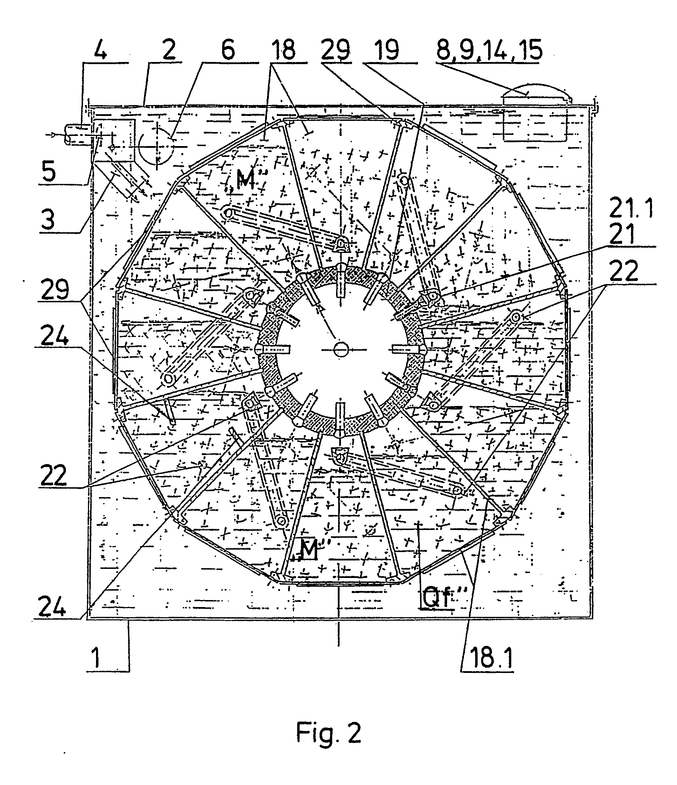

(57) Der "Hydrodynamische Tauchkammer-Bioreaktor" nach Fig. 2, welcher mittels bekannter mikrobieller Methoden, wie durch - in Füllkörpern (Q 7) angesiedelten, von Kohlenstoffträgern (9) ernährten Bakterienstämmen prinzipielle Umweltflüssigkeitsnitratübermengen ("M") abbaut, wird einsatzfähig nach gleichmengiger Ladung seiner Tauchkammern (18) mit Porenfüllkörpern ("QF"), sowie des C-Quellennährstoffimplikators (9), dem anschließenden öffnen des Vakuumpumpenentlüftungsventils (11, 14, 15) und Rohwasserzuflußdüsenabsperrhahns ("M", 3, 5).

Letzteres bewirkt die Füllung der Bioreaktorwanne (1) mit nitratüberbelastetem Rohwasser ("M"), bis zum Füllungsnominalspiegel ("M"), wonach der Zuflußschwimmer (6) steuerimpulseinwirkend (7, 7.1, 7.2, 8.1, 8.2, 12, 16) auf den Bakteriennährstoffdosierungsimplikator (9) reagiert sowie auf die Zuflußventile (21) der einzelnen Tauchkammern (18), diese im längsaxialen Rotationssektor des Tauchkammerblocks (17.1, -25 + 29) ("QF") reihenfolgezyklisch öffnend ("7" 13, 21, 22), somit deren jeweiliges Flüssigkeitsfüllen ("M") bis zum Entgasungsdomdruckausgleichniveau (25, 26, 27, 28) bewirkend, ein reihenperiodisches drehaxiales Übergewicht ("QF" + "M") einer Tauchkammerrotorblockhälfte (17.1 - 25 + + 29) verursachend - bis zur stillstandbewirkenden Rohwasserfüllung ("M") aller Tauchkammern (18).

Nachdem im entsprechender Ruhestandzeitspanne die angesiedelten Bakterienstämme nitratreduzierend ("M") nominalwirkend waren, wird der Tauchkammerausflußstutzen ("A" 21.1, 19) der drehrichtungs zenithpunktnächsten Tauchkammer (18) geöffnet, diese (18) mittels tieferliegendem Ausflußkanalhalbteils ("A", 19) entleerend, dadurch enstehende einseitigkontiunierliche Kammerauftriebsreak-

EP 0 414 957 A1

tion (18) in flüssigkeitsniveaudifferierte ("M", "Z" / "A") - hydromechanisch -energieeffektive längsaxig-schwimmende ("M") Tauchkammerblockrotation (17.1 - 25 + 29) verwandelnd, autarke Drehzahlre-glerbremskraft (7, 7.2) in Schwachstrom (7.1) umfor-mend, welcher der Ausflußwassernitratfrachtmessung ("M", "A", 7, 8.1, 8.2) dient, sowie meßwertimpuls-entsprechend (8, 8.1, 8.2) der Steuerung (7, 7.2, 9, 12) von hydromechamisch (5, 6, 12, 21, 21.1) -technologischen (9, 10, 14, 16) Bioreaktorausstat-tungselementen.

Fig. 2

Die Erfindung betrifft einen hydrodynamischen Tauchkammer-Bioreaktor zum mikrobiellen Abbau prinzipiell von Nitratübermengen aus Landschafts-, Siedlungs-, Landwirtschafts-, Gewerbe- und Industrieabwässern, aber auch alternativer Flüssigkeitsdekontaminierung "M", da aufgrund von autarker Steuerung der zellenvermehrenden C-Quellen-Nährstoffimplikation und seiner Füllkörperaktivitätskinetik "QF" optimale Vegetationsbedingungen für heterotrophe Bakterien kontinuierlich gesichert werden, wodurch eine maximale mikrobiologische Nitratabbauleistung in den Durchsatzflüssig keiten "M" erreicht wird, bei leistungssynchronisierter Durchflußmengenregelung adäquat zur Nitratbelastung der zu behandelnden Wasserarten "M", wobei als Antriebs- und Steuerenergiequelle die hydrodynamische Kraft genutzt wird, die mittels ihrer kinetischen Größe beim natürlich differierrendem Zu-Ablaufspotential des flüssigen Mediums "M" oder am Zwangsleitungsanfang durch Pumpenwirkung auftritt, die Zuleitung dabei als Energietransmitter nutzend, so daß unabhängig von einem direkten thermoenergetischen Antriebsanschluß, der Einsatzstandort gewählt werden kann, da nach Schaffung der technologischen Voraussetzung, das ist das gleichmengige Laden der Tauchkammern 18 mit vorgegebenem Füllkörper "QF" und Schließen der Füllkörperladelukendeckel 29 und Reaktorwannen-Abdichtungsdeckel 2 sowie der Speicherung des entsprechenden Nährstoffes im Tank des Nährstoffmengenimplikators 9, das Entlüftungsventil 15 der Vakuumpumpe 14 geöffnet wird, wie auch der Zuflußabsperrhahn 5 an der Zuflußdüse 3, wonach sich die Reaktorwanne 1 bis zur Spiegelmarke mit nitratbelastetem Wasser "M" füllt und gleichzeitig mittels der Zuflußdüseneinleitung 3 die flüssigkeitsanteiligen zu Bläschen agglomerierten Luftpartikel über die Wasserspiegeloberfläche entweichen, bis zum Abschluß der Nominalmengenflutung des aufzübereitenden Mediums "M" in der Reaktorwanne 1, was somit den Vorabstop des Zuflußschwimmers 6 bewirkt, den Nährstoffimplikator 9 einschaltet, wie auch die Zuflußventile 21, 21.1 der eizelnen Tauchkammern 18 in deren zugeordnetem Sektor zyklisch öffnet, wodurch die in der Reaktorwanne 1 zeitgestaute Flüssigkeit "M" hintereinander die Tauchkammer 18 bis an den Entgasungsdom 26 nacheinander füllt, da der Stickstoffaustritt 11 den atmosphärischen Druckausgleich ermöglicht, wodurch das mittels zyklischer Nachfolgeflutung auftretende Übergewicht eine periodische, längsaxige Drehbewegung des Tauchkammerblocks 17.1-25 und 29 verursacht, was solange geschieht bis alle Tauchkammern 18 durch die Flüssigkeits-Übergangsbrücken 22 entsprechend verfüllt wurden und der trommelartige Tauchkammerblock 17-25 und 29 zum Stillstand kommt, bei gleichzeitigem Schließen des Zuflußabsperrhahns 5, des Entlüfungsventils 15 und des Nährstoffimplikators 9 durch einen Impuls des Schwimmers 6 für solange bis die mit dem C-Quellen-Nährstoff parallel in die zwischengestaute Flüssigkeit "M" implizierten, heterotrophen Bakterien eigenzellenvermehrend sowie nitratreduzierend gewirkt haben und nach vorab manuellem effektbestätigendem Testat der Ausflußstutzen 10 geöffnet wird und das Wasser "M" der zur Zeit sich am höchsten im Auftriebssektor befindenden Tauchkammer 18 über den tieferen, mittig angebrachten und durch die Kanalblende 20 geteilten Abschnitt des Abflußkanals 19 abgeleitet wird, da das entsprechende Abflußventil 21.1 durch die Steuerwalze 12 geöffnet wurde und der Stickstoffaustritt 11 den atmosphärischen Druckausgleich ermöglicht, womit eine kontinuierliche Durchfluß-Drehbewegung einsetzt, deren Maschinenfunktion auf dem ständig auftretenden hydrogravitätischen Potential beruht und mit in schwachen Gleichstrom umgeformten Bremsenergie des Drehzahlreglers 7 zusammenwirkt, welche sowohl dissotiative Qualitätsmessungen mit Steuerimpulsnutzung von Durchflußmenge, Verweilzeit und Implikation ermöglicht, als auch die Energiespeisung des UV-Strahlers 16, des Implikators 9 und der Vakuumpumpe 14, die einerseits den wasserfreien Raum der Reaktorwanne 1 in einen sauerstoffarme Luftunterdruckzone versetzt und anderseits mit dieser abgezogenen Fracht, das aus dem Rückstandfilter 13 abfließende denitrifizierte Wasser mit nominalem Sauerstoffanteil wieder anreichert.

Bekannt ist, daß unter anderem Flüssigkeitsdekontaminierungsvorgänge die normenentsprechende Denitrifikation von Trink-, Grund- und Abwässern prinzipiell auf selektiv- differierte effektive chemisch-physikalische Methoden wie Ionenaustausch, Elektrodialyse und Umkehrosmose oder auf biotechnologischer Art und Weise mittels heterotropher Mikroorganismen in anoxischen Verhältnissen durchgeführt werden und das wiederum im statischen Prozeßablauf, wie beispielsweise von der Firma Preussag (Dinipor-Verfahren) oder im dynamischen Prozeßablauf wie es beim Hubstrahl-Bioreaktor für aerobe Abwasserreinigung von Prof. Brauer, Institut für anaerobe Abwasserreinigung der Technischen Universität Berlin, sowie beim Roto-Bioreaktor der Kernforschungsanlage Jülich der Fall ist.

Das gemeinsame Kennzeichen dieser Anlagen oder Maschinen ist deren hoher Material- und Betriebsenergiebedarf im Verhältnis zum erzielten Effekt und Nachteil zugleich, denn die statischen Systeme setzen ein hohes Arbeitsvolumen und größere, öfter zu wechselnde Füllkörpermengen "QF" voraus, wogegen die bisher gekannten dynamischen Bioreaktoren, die zwar zum Unterschied bei gleichem Durchsatzeffekt eine kleinere Anlagenmasse von den statischen Systemen aufweisen, aber dafür einen höheren Antriebsenergiebedarf pro Leistungseinheit haben, da kontinuierlich deren Füllkörpermasse "QF" in einseitig wechselnde Bewegung versetzt werden muß. Der gravierende Unterschied der erfindungstreuen Maschine zur bisher bekannten Konstruktion der aufwendigeren statischen Denitrifikation wie auch der rotierenden Ausführung, besteht in ihrer von Leistung in Zeit, Raum mittels Maschinenmasse und Betriebskosten deren relevant vorteilhaften Kostengröße. Die konventionellen Konstruktionen weisen nämlich, außer Energie-Anschlußinstallation, Antriebsvorrichtungen und mit diesem zusammenhängend den Bedarf von Zusatzelementen, einen wälzmassen-differierten Dauerhub des Füllkörpers auf, sowie die ausschließlich mechanische Lagerungen, deren Reibungszahl mindestens zehnmal höher ist als die Reibungszahl der erfindungstreuen Wasserlagerung.

Daher liegt dem hydro-dynamischen Tauchkammern-Bioreaktor vorrangig zugrunde, aufgrund seiner markanten Ausführungs-und Betriebseffekte, wirtschaftlich äußerst vorteilhaft und in spürbarer, allgemeiner Größenordnung fast überall bei der Denitrifizierung von Trink-, Grund- und Abwässern zum landesweiten Einsatz zu gelangen, was durch dessen günstigem Verhältnis von Maschinenmasse zur Leistung eine beispiellose Begründung finden wird.

Mittels erfindungstreuer Konstruktionseigenschaften, wird alternativ zu bisher bekannten Prinzipien die hydrodynamische Energie des eingeleiteten nitrathaltigen Wassers "M" genutzt um im Vergleich zu den bisher bekannten Denitrifikationssystemen mit größenanalogen Bio-Effekten qualitätsgesteuerten Durchsatz kostengünstiger und aufwandsärmer zu erzielen, denn dieser bislang nicht erreichte Wirkungsgrad wird im Effektverbund mit projektiertem Tauchkammer-System 18, welches prinzipiell waageentsprechend ausbalanciert arbeitet, somit noch exergetisch stark gesteigert wird, wobei die Wirksamkeiten bekannter Nährstoffträger und Füllkörperstrukturen "QF" der konventionellen Mikro-Biosphäre vollkommen optimiert werden mittels synchronisierter Steuerung 8 von biothermischen, biochemischen, mikrobiologischen, energetischen und elektro-mechanischen Verbundeffekten, was sich in ökologisch-medizinischer und zugleich wirtschaftlicher Hinsicht vorteilhaft bei der kommunalen und gewerblichen Trink- und Abwasserwirtschaft auswirken wird. Die markanten Kennzeichen und zugleich Vorzüge des solo- oder im Block arbeitenden, hydrodynamischen Tauchkammern-Bioreaktors, welcher unabhängig von elektrischer Antriebsenergiezuleitung überall zum prinzipiellen Denitrifizierungseinsatz von Trink- und Abwässern "M" gelangen kann, um mittels Bakterienstämmen und für diese vorgesehene Füllkörper "QF" sowie Nährstoffträgern zu Grunde gelegter Art, die durch entsprechend gewählte mikrobielle Methode vorgegeben sind, vorrangig Nitratübermengen aus Flüssigkeiten "M" abzubauen, aber auch andere Dekontaminierungsverfahren auf roto-dynamischer Basis aufwand arm und kostengünstig durchzuführen, ergeben sich aus der erfindungstreuen Konstruktion, welche im Ausführungsbeispiel des hydro-dynamischen Tauchkammern-Bioreaktors sich aus dem statischen Teil 1-17 und dem zugepaßten dynamischen Teil 17.1-25 + 29 zusammensetzt, wobei der statische Teil 1-17 aus der Reaktorwanne 1 mit Abdichtungsdeckel 2, dem Zuflußkanal 3, Anschlußstutzen 4, Zuflußabsperrhahn 5 mit Schwimmer 6, dem Drehzahlregler 7 mit Mikro-Gleichstromgenerator 7.1 und elektro-magnetischer Gangschaltung 7.2, der elektronischen Meß- und Regelautomatik 8.1 mit Digitalanzeige 8.2 von Durchsatzgutmenge, Nitratbelastung beim Zufluß, Ausfluß und dem Nährstoffmengenimplikator 9, dem Ausflußstutzen 10 mit Stickstoffaustritt 11, Stopfbuchsen 17 des Kanalendstücks und der Ventilsteuerwalze 12, dem mikrobiologischem Rückstandfilter 13, der Vakuumpumpe 14 mit Sauerstoffrückspeisung 15 im Ausflußstutzen 4 mit UV-Strahler 16, den zwei stirnseitigen Tauchkammerblock-Gleitsitzarretierungen 17.1 bestehen, und der dynamische Maschinenteil 17.1-25 + 29, welcher in Form eines Tauchkammerblocks ausgeführt ist, der sich im wesentlichen zusammensetzt aus den längsaxigen mit einem Wandungsteil 18.1 aneinanderliegenden und stirnseitig abgeschlossenen Tauchkammern 18, die ringartig um den zentrisch gebildeten Gemeinschaftszu- und abflußkanal trommelförmig angeordnet sind, dessen Zu- und Abflußzone "A" + "Z" mittels einer Kanalblende 20 voneinander getrennt sind, weiterhin aus den im Zu- und Abflußkanal entsprechend eingesetzten Zufluß- und Abflußventilen 21.1, den beiderseits stirnwandig angesetzten Flüssigkeits-Übergangsbrücken 22, den beiderseitigen Füllkörperblenden 23, den tauchkammerinneren Füllkörpermischflügeln 24, dem Entgasungsring 25 mit Entgasungsdom 26, Tauchkammer-Entgasungsschleusen 27 und Stickstoffaustritt 28 und den jeweils am Außenmantel 18.1 der Tauchkammern 18 dicht angebrachten Füllkörperladelukendeckel 29.

Dieser sich drehender Block 17.1-25 + 29, welcher ein Verbundsystem aus mehreren teilseitig aneinanderliegenden Kammern 18 bildet und in Form eines längsaxigen Zylindergefüges mit zentrischen Gemeinschaftsabflußkanal 19, reihenverbindenden Umleitungsbrücken 22 sowie mit äußeren Ein- und inneren Ausflußventilen 21. + 21.1 ausgestattet ist, was im technologie- und maschineneffektiven Leistungsverbund mit der den statischen Hauptteil bildenden Wanne 1 und der in diese eingebaute elektromechanischen Regeltechnik 7 die erfindungsgemäße Funktionstüchtigkeit bewirkt, indem dieser vertikal in der flexibel arretierte Block 17.1-25 + 29 im zugeleiteten Medium "M" zum horizontal-drehbaren Schwimmen kommt, da die in der Reaktorwanne 1,2 zeitgestaute Durchsatzflüssigkeit "M" dort durchsatzkompensiert wird, um periodisch die flüssigkeitsentleerten Tauchkammern 18 durch das gravitische Druckpotential nachzufüllen, welches zwischen dem höheren Flüssigkeits "M"-Spiegelbereich und dem tieferen Niveau des zentrischen Gemeinschaftskanal 19 kontinuierlich auftritt, wodurch die systematische, längsaxig-horizontale Drehbewegung des Kammernverbundsystems 18 mittels der Auftriebskraft der jeweils entleerten Kammern 18 bewirkt wird, wodurch die Denitrifizierungs- oder Alternativreaktionen sogar in antriebsarmen, abgelegenen oder energieversorgungsschwierigen Standorten umwelt- und gesundheitsfreundlich eingesetzt werden kann.

Da die Erfindung außer dem geringen Reibungswiderstaned der Wasserbettlagerung "M" noch eine Massenausgewogenheit des rotierenden Vorrichtungsteiles 17.1-25 + 29 + "QF" aufweist, der sich aus mehreren längsaxigen mit den Wandungsteilen 18.1 aneinanderliegenden und stirnseitig abgeschlossenen Tauchkammern 18 zusammensetzt, die ringartig um den zentrischen mit einer Kanalblende in die Zu- und Abflußzone "Z", "A" geteilten Durchflußkanal 19 eine Trommelform bildend, situiert sind, welche zur waagerechten Rotation durch die abgestimmte mengenbeeiflußte Arbeit der Zufluß- und Abflußventile 21 + 21.1 gerät, wo durch die Tauchkammern 18 einzeln mit dem flüssigen Durchsatzgut "M" gefüllt und entleert werden oder in Verbund anordnung mittels der Übergangsbrücken 22 aber immer so, daß keinesfalls Füllkörpereinheiten "QF" mitgetragen werden, da Füllkörper-Korbblenden 23 dieses verhindern durch deren entsprechenden Abstand zu den beiderseitigen Stirnwänden 18.1 der Tauchkammern 18 deren Kammerwandung 18.1 mit Füllkörpermischflügeln 24 und Füllkörperladelukendeckel 29 inklusive Entgasungsdom 26 bestückt sind, wodurch eine Füllkörperfreizone entsteht, in welcher die Entgasungsschleuse 27 immer ungehindert schwimmend sich am Flüssigkeitsspiegel "M" bewegt, um durch ihre elastische Verbindung mit dem Entgasungsring 25 beispielsweise freien Stickstoffaustritt 28 zu gewähren, ohne Verlust von denitrifiziertem Wasser "M" oder der nitratübermengigen Input-Flüssig keit "M", welche vorerst die mit einem Abdichtungsdeckel 2 verschlossene Reaktorwanne 1 bedarfsentsprechend füllt durch die Funktion von Anschlußstutzen 4, Zuflußabsperrhahn 5 mit Schwimmer 6 und Zuflußdüse 3, so daß der an die Reaktorwanne 1 befestigte Drehzahlregler 7 des in vertikaler Gleitsitzarretierung 17 + 17.1 gehalterten trommelförmigen Tauchkammerblocks 17.1-25 + 29 zweckentsprechend effektiv werden kann und somit auch der gekoppelte Mikro-Gleichstromgenerator 7.1, welcher dann die elektro-magnetische Gangschaltung 7.2, die digitale Meß- und Regelautomatik 8.1 sowie den mit dieser synchronisierten Nährkraftträger-Mengenimplikator 9 mit Betriebsenergie versorgt, wie auch die entsprechend befestigte Vakuumpumpe 14 mit Sauerstoffrückspeisung 15 im Raum des Ausflußstutzens 4, welcher mit einem Stickstoffaustritt 11, Rückstandfilter 13, UV-Strahler 16 und Stopfbuchsen 17 + 17.1 ergänzt ist, in denen abgedichtet das Kanalendstück 10 des Durchflußkanals 19 drehbar sitzt, wie auch die Ventilsteuerwalze 12, wobei die Bremsenergie des Drehzahlreglers 7 mittels eines Mikro-Gleichstromgenerators 7.1 umgeformt als autarke Elektrokraftquelle dient.

Die Beschreibung eines Ausführungsbeispieles ergibt weitere Einzelheiten der vorteilhaften Merkmale dieses erfindungstreuen hydrodynamischen Tauchkammern-Bioreaktors zur Denitrifikation von Trink-, Grund- und Abwässern, im Prinzip aber auch für andere mögliche Dekontaminierungsverfahren auf mikrobieller Basis sowie alternativen roto-dynamischen Flüssigkeitsbehandlungsmethoden, die in der Zeichnung dargestellt sind.

Es zeigt

Fig. 1 eine Seitenansicht des schematisch dargestellten hydro-dynamischen Tauchkammern-Bioreaktors als Konstruktionsbeispiel.

Fig. 2 die schematisch ausgeführte rechte Querschnittshälfte A-A und linke Querschnittshälfte B-B der in Fig. 1 dargestellten Seitenansicht des dynamischen Tauchkammern-Bioreaktors im Konstruktionsbeispiel.

Der dynamische Tauchkammern-Bioreaktor zur Denitrifikation von Trink-, Grund- und Abwässern aber auch für analoge Verfahren auf hydro-dynamischer Basis, dessen sich drehender Block ein Verbundsystem aus mehreren teilseitig aneinanderliegenden Kammern bildet in der Form eines längsaxigen Zylindergefüges ist mit zentrischem Gemeinschaftsabflußkanal, reihenverbindenden Umleitungsbrücken sowie äußeren Ein- und inneren Ausflußventilen ausgestattet. Das bewirkt im technologie- und maschineneffektiven Leistungsverbund mit der den statischen Hauptteil bildenden Wanne sowie in diese eingebauten elektromechanischen Regeltechnik die erfindungsgemäße Funktionstüchtigkeit der Maschine. Da dieser Block in einer Wanne vertikalflexibel und drehbar arretiert ist, kommt er im zugeleiteten und dort zeitgestauten Medium zum langsam horizontal-rotierenden Schwimmen, da diese Flüssigkeit in der Reaktorwanne durchsatzkompensiert wird, um periodisch die flüssigkeitsentleerten Tauchkammern nachzufüllen mittels des gravitätischen Druckpotentials, welches zwischen dem höheren Flüssigkeits-Spiegelbereich und dem tieferen, im zentrischen Gemeinschaftskanal kontinuierlich auftritt. Somit bewirkt die zügig einsetzende Auftriebskraft der jeweils entleerten Kammer die systematische, längsaxig-horizontale Drehbewegung des Kammernverbundsystems.

Dadurch gelingt es, die Denitrifizierung- oder Alternativreaktionen sogar in antriebskraftarmen, abgelegenen oder energieversorgungsschwierigen Standorten umwelt- und gesundheitsfreundlich einzusetzen, wobei das - durch diese schwimmend-rotierenden Konstruktion ermöglichte Arbeits-Reibungsminimum, sogar eine notwendige, gesteuerte Drehbewegungsbremsung bewirkt, deren umgeformte Energie zur Speisung der kontinuierlichen Regeltechnik und Qualitätsmessung auf elektrolytischer Dissotiationsbasis dient.

Der gravierende Unterschied des Erfindungsgegenstandes zur bisher bekannten Konstruktion der aufwendigeren statischen Denitrifikation und solcher in rotierender Ausführung besteht im relevantem Leistungsvorteil von Kostengrößen in analoger Zeit und Raum, welche nämlich in bisherigen Denitrifikationsvorrichtungen außer dem Aufwand von Mitteln für die Energie-Anschlußinstallation, den Antriebsvorrichtungen und mit diesen im Zusammenhang stehenden Elementen, vor allen Dingen kostenaufwändig sind durch den bislang auftretenden wälzmassen-differierten Dauerhub des Füllkörpers und der ausschließlich mechanischen Lagerungen, deren Reibungszahl mindestens zehnmal höher ist als die Reibungszahl der erfindungstreuen Wasserlagerung.

Der bislang nicht erreichte ökologisch-ökonomische Faktor dieser Erfindung wird im Effektverbund des wassergelagerten Tauchkammersystems, das prinzipiell mit waagerecht ausbalancierten Füllkörpermengen arbeitet, auch noch durch Letzteres exergetisch stark gesteigert. Den bio-chemischen Prozeßablauf sichern bekannte Nährkraftträger und Füllkörperstrukturen der entsprechenden konventionellen Mikro-Biosphäre, deren Leistungsfaktor mittels synchronisierter Steuerung ihres biothermischen-, biochemischen-, mikrobiologischen-, energetischen- und elektro-mechanischen Verbundeffektes, einen optimalen Wirkungsgrad im Einsatz garantieren.

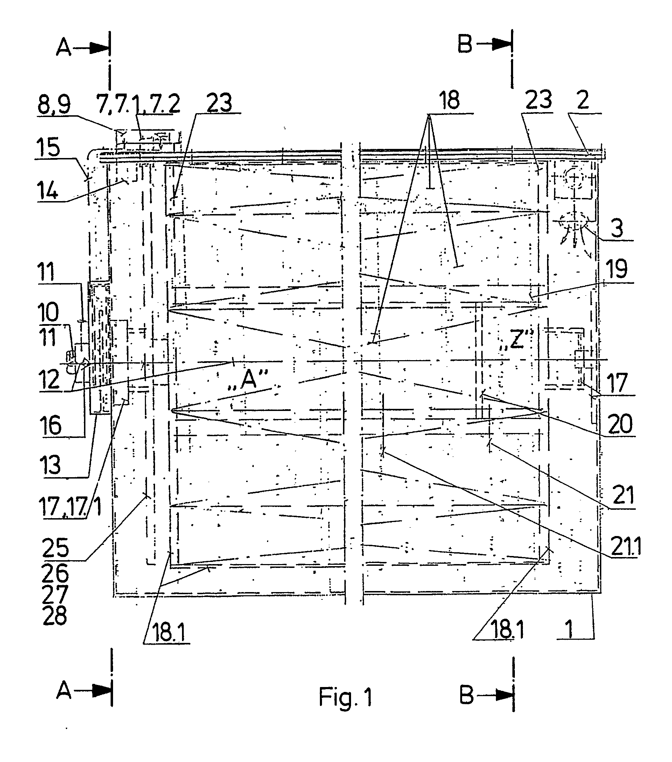

dieser im Konstruktionsbeispiel in Fig. 1 und Fig. 2 erfindungstreu schematisch gezeigte hydrodynamische Tauchkammern-Bioreaktor, welcher sich aus den Positionen 1-29 alternativ zusammensetzt, wo seine charakteristischen Merkmale und Vorteile zugleich in grundsätzlichen Umrissen dargestellt sind, die prinzipienentsprechend bewirken, daß technologiegerecht und nutzungsalternativ dessen Einsatzstandort unabhängig von einem bis jetzt vorbedingten extern-elektrischen Antriebsanschluß gewählt werden kann um dann mittels Bakterienstämmen, Füllkörperarten und Nährstoffträgern bekannter mikrobieller Methoden, vorrangig Nitratübermengen aus Flüssigkeiten abzubauen, aber alternativ auch andere Dekontaminierungsverfahren auf roto-dynamischer Basis nach Schaffung der technologischen Voraussetzung durchführen zu können, das ist nach dem gleichmengigen Laden der Tauchkammern 18 mit vorgegebenem Füllkörper "QF" und Schließen mittels der Füllkörperladelukendeckel 29 wie auch die Reaktorwanne 1 mit dem Reaktorwannen-Abdichtungsdeckel 2, sowie dem Speichern des entsprechenden Nährstoffes im Tank des Nährstoffmengenimplikators 9, dem Öffnen des Entlüfungsventils 15 der Vakuumpumpe 14, wie auch des Zuflußabsperrhahns 5 an der Zuflußdüse 3. Diese vorher bestimmte Ausführung bewirkt, daß die Reaktorwanne 1 mit nitratbelastetem Wasser "M" bis zur Spiegelmarke gefüllt wird, wobei die flüssigkeitsanteiligen Luftpartikel mittels der Zuflußdüseneinleitung 3 zu Bläschen agglomeriert werden und so über die Wasserspiegeloberfläche konstruktionsgerecht entweichen. Nach der Nominalmengenflutung des aufzübereitenden Mediums "M" in die Reaktorwanne 1 reagiert der Zufluß-Schwimmer 6 auch auf den Nährstoffmengenimplikator 9 diesen einschaltend wie auch die Zuflußventile 21 der einzlnen Tauchkammern 18 zyklisch in deren Senksektor öffnend, wodurch die in der Reaktorwanne 1 vorher zeitgestaute flüssigkeit "M" hintereinander die Tauchkammern 18 bis an den Entgasungsdom 26 jeweils flutet, da gleichzeitig der Stickstoffaustritt 28 den atmosphärischen Druckausgleich ermöglicht.

Das somit auftretende Übergewicht in einer Kammerblockhälfte 18 verursacht eine periodische, längsaxige Drehbewegung der Tauchkammerblocks 18, was solange geschieht, bis alle Tauchkammern 18 durch die Flüssigkeits-Übergangsbrücken 22 entsprechend verfüllt wurden und der trommelartige Tauchkammerblock 18 zum Stillstand kommt, bei gleichzeitigem Schließen des Zuflußabsperrhahns 5, des Entlüftungsventils 15 + 27 sowie des Nährstoffimplikators 9 mittels Impuls des Schwimmers 6.

Nachdem parallel die mit dem C-Quellen-Nährstoff in die zwischengestaute Flüssigkeit "MM implizierten, heterotrophen Bakterien sich zellenvermehren und entsprechend nitratreduzierend gewirkt haben, wird nach vorab manueller effektbestätigender Messung, der Ausflußstutzen 10 geöffnet und das Wasser "M" der zur Zeit am höchsten im Auftriebssektor sich befindenden Tauchkammer 18 über den tieferen, mittig situierten und durch die Kanalblende geteilten Abschnitt des Abflußkanals 19 abgeleitet, was durch das entsprechende Abflußventil 21.1, welches durch die Steuerwalze 12 geöffnet wurde, sowie den Stickstoffaustritt 11, der den Druckausgleich bewirkt, durchführbar ist. Dadurch setzt eine kontinuierliche Arbeitsfluß-Drehbewegung ein, deren Maschinenfunktion auf dem ständig auftretenden hydro-gravitätischen Potential beruht, im Zusammenwirken mit dem in schwachen Gleichstrom umgeformten Bremsenergieeffekt des Drehzahlreglers 7. Diese Energie gestattet sowohl die dissotiative Qualitätsmessungen mit synchronisierter Steuerimpulsnutzung von Durchflußmenge, Verweilzeit und Implikation, wie auch das Betriebsenergiespeisen des UV-Strahlers 16, des Nährstoffmengenimplikators 9 und der Vakuumpumpe 14, welche einerseits den wasserfreien Raum der Reaktorwanne 1 in sauer stoffarmen Luftunterdruckbereich versetzt und anderseits mit dieser abgezogenen Fracht das aus dem Rückstandfilter 13 abfließende denitrifizierte Wasser "M" wieder mit nominalem Sauerstoffanteil dadurch anreichert. Der mikrobielle Abbau von Niträtübermengen aus Trinkwassern, die in die Nahrungskette gelangen, aber auch von Abwässern, welche die ökologischen Verhältnisse der Umwelt belasten, geschieht prinzipiell mit Hilfe von heterotrophen Bakterien, deren Nitrat-Abbaukapazität in Zeit und Raum von ihrer kontinuierlichen Population und somit von ihren Vegetationskriterien abhängt, so daß für diese existenzfördernde Bedingungen geschaffen sein müssen. Bestimmt werden die Voraussetzungen von den nominalen Durchsatzparametern und der Nitratfracht der Mediummenge "M", von der Füllkörpermasse "QF", von der Flüssigkeitstemperatur, von der Kinetik des Durchsatzmediums "M" und von der G-Quellen-Nährstoffimplikation. Durch synchronisiertes Zusammenwirken all dieser Parameter lassen sich leistungsoptimale Wirkungsbedingungen für eine erfindungtreue Effektivität erst dann erreichen. Prinzipiell ergeben sich diese aus dem Vektor von konstanten Effekten wie der vegetativ-mikrobiellen Größe, welche von Raum, Zeit, Temperatur und C-Quellen-Nährstoffdosis festgelegt ist, und dem Vektor der flexiblen Effekte, welcher von der Flüssigkeitsdurchflußmenge und Nitratbelastung bestimmt wird. Da die konstanten Komponenteneffekte in der Vorrichtungskonstruktion - zwar regelbar - vorgegeben sind, muß die Steuerung der Durchflußmenge sicherstellen, daß die Verweilzeit im hydrodynamischen Tauchkammer-Bioreaktor von der flüssigkeitsanteiligen Nitratfracht bestimmt wird, unter der Voraussetzung, daß einer Aufnahme gasförmigen Sauerstoffs durch die angesetzten Mikroorganismen konstruktiv vorgebeugt wird und das auch schädlicher UV-Einfluß auf diese ausgeschlossen werden muß. Die behandelte Flüssigkeit wird erst nach Austritt aus dem mikro-biologischen Reaktionsbereich und Durchlauf durch die UV-Schleuse mit Sauerstoff aus der internen und externen Umluft entsprechend wieder angereichert. Das volkswirtschaftliche und sanitär-relevante Ziel der Erfindung ist die sozialökologische Einführung dieses hydro-dynamischen Tauchkammer-Bioreaktors, vorrangig zum mikrobiellen Abbau von Niträtübermengen aus Landschafts-, Siedlungs-, Landwirtschafts-, Gewerbe- und Industrieabwässern, aber auch alternativ für prinzipienähnliche Einsätze, da aufgrund der autarken Steuerung der zellenvermehrenden C-Quellen-Nährstoffimplikation und Füllkörper"QF"-Aktivitätskinetik, für die heterotrophen Bakterien optimale Vegetationsbedingungen kontinuierlich gesichert werden. Dadurch wird in den Durchsatzflüssigkeiten "M" ein maximaler mikrobiologischer Nitratabbaueffekt erreicht, durch leistungssynchronisierter Durchflußmengenregelung 8.2 adäquat zur Nitratbelastung der zu behandelden Wasserarten "M".

Als Antriebs- und Steuerenergiequelle wird dabei die hydrodynamische Kraft genutzt, die mittels kinetischer Größe bei natürlich differierendem Potential des flüssigen Mediums "M" oder am Zwangsleitungsanfang durch Pumpenwirkung auftritt, wobei die Zuleitung als Energietransmitter wirkt. So ein kostengünstiger und aufwandsarmer Betrieb des hydrodynamischen Tauchkammern-Bioreaktors kann also unabhängig von einem direkten thermoenergetischen Antriebsanschluß am Einsatzstandort stattfinden. Somit wird durch erfindungtreue Konstruktionseigenschaften - alternativ zu bisher bekannten Prinzipien -die hydrodynamische Energie des eingeleiteten nitrathaltigen Wassers "M" sowie seines sehr niedrigen Reibungskoeffizienten genutzt, um im Vergleich zu herkömmlichen Denitrifikationssystemen, größenanaloge Bio-Effekte im qualitätsgesteuerten Durchsatz kostengünstiger und aufwandsärmer zu erzielen.

## Ansprüche

1. Der hydrodynamische Tauchkammern-Bioreaktor, dessen Einsatzstandort unabhängig von einem bis jetzt vorbedingten extern-elektrischen Antriebsanschluß gewählt werden kann, um mittels Bakterienstämmen, Füllkörperarten und Nährstoffträgern bekannter mikrobieller Methoden, vorrangig Nitratübermengen aus Flüssigkeiten abzubauen, aber auch andere Dekontaminierungsverfahren auf rotodynamischer Basis durchzuführen, die außer den vorrichtungsstarren Ausführungen bislang entweder in statischer Ummantelung mit beweglicher Innenausrüstung erstellt oder in dynamischer Kompaktausführung, immer aber mit einem vorrichtungseigenen elektro-mechanischen Antrieb versehen waren, der den direkten bzw. indirekten Investitionsaufwand und die Betriebskosten durch kontinuierlichen Elektro-Energieverbrauch belastete, **gekennzeichnet durch** die Merkmale und deren Gemeinsamkeit, daß

a) im Konstruktionsbeispiel der hydro-dynamische Tauchkammern-Bioreaktor bestehend aus dem statischen Teil, der sich aus der Reaktorwanne (1) mit Abdichtungsdeckel (2) den Zuflußkanälen (3), Anschlußstutzen (4) und Zuflußabsperrhahn (5) mit Schwimmer (6), dem Drehzahlregler (7) mit Mikro-Gleichstromregler (7.1) und elektro-mag netischer Gangschaltung (7.2), der elektronischen Meßund Regelautomatik (8) mit Digitalanzeige (8.1) von Durchsatzgutmenge (8.2), Nitratbelastung bei Zufluß, Ausfluß und Nährstoffmengenimplikator (9), dem Ausflußstutzen (10) mit Stickstoffaustritt (11), Stopfbuchsengleitlager (17) von Kanalendstücken und Ventilsteuerwalze (12), sowie dem mikrobiologischen Rückstandfilter (13), der Vakuumpumpe (14) mit Sauerstoffrückspeisung (15) im Ausflußstutzen (10), UV-Strahler (16) und den zwei stirnseitigen Tauchkammerblock-Gleitsitzarretierungen (17.1), worin der dynamische Maschinenteil flexibel sitzt, welcher in Form eines Tauchkammerblocks ausgeführt ist und sich im wesent lichen zusammensetzt aus den längsaxigen mit einem Wandungsteil (18.1) aneinanderliegenden stirnseitig abgeschlossenen Tauchkammern (18), die ringartig um den zentrisch gebildeten Gemeinschaftszu- und -abflußkanal (19) trommelförmig angeordnet sind, die Zu- und Abflußzone (Z) (A) mittels einer Kanalblende (20) voneinander trennend, sowie den im Zu- und Abflußkanal (19) eingesetzten Zu- und Abflußventilen (21) (21.1), den beiderseits stirnwandig angesetzten Flüssigkeits-Übergangsbrücken (22), den beiderseitigen Füllkörperblenden (23), den tauchkammerinneren Füllkörpermischflügeln (24), dem Entgasungsring (25) mit Entgasungsdom (26), Tauchkammer-Entgasungsschleusen (27) und Stickstoffaustritt (28) und den jeweils am Außenmantel der Tauchkammer (18) dicht angebrachten Füllkörperladelukendeckel (29), was nach Montage einen

b) sich drehenden Block im Verbundsystem aus mehreren teilseitig aneinanderliegenden Tauchkammern (18) bildet, in Form eines längsaxigen Zylindergefüges mit zentrischen Gemeinschaftsabflußkanal (19) und reihenverbindenden Umleitungsbrücken (22) der mit äußeren Ein- und inneren Ausflußventilen (21) (21.1) ausgestattet ist, was im technologie- und maschineneffektiven Leistungsverbund mit der den statischen Hauptteil bildenden Wanne (1) und der in diese eingebauten elektro-mechanischen Regeltechnik (8), (8.1), (8.2) die erfindungsgemäße Funktionstüchtigkeit bewirkt, indem dieser vertikal in der Wanne (1) arretierte Block (17.1-25 + 29) im zugeleiteten Medium (M) zum horizontalflexibeldrehbaren Schwimmen kommt, da die in der Reaktorwanne (1) zeitgestaute Durchsatzflüssigkeit (M) dort durchsatzkompensiert wird, um periodisch die flüssigkeitsentleerten "M" Tauchkammern (18) durch das gravitische Druckpotential nachzufüllen, welches zwischen dem höheren Flüssigkeitsspiegelbereich und dem tieferen, zentrischen Gemeinschaftskanal (10) kontinuierlich auftritt, was dadurch die systematische längsaxighorizontale Drehbewegung des Kammernverbundsystemes be wirkt mittels einsetzender Auftriebskraft der jeweils entleerten Kammern (K), wodurch die vorgegebenen Denitrifizierungs- oder Alternativreaktionen sogar in antriebsarmen, abgelegenen oder energie-versorgungsschwierigen Standorten umwelt- und gesundheitsfreundlich zur Nutzung gelangen,

c) da die Erfindung außer dem geringen Roto-Reibungswiderstand der Wasserbettlagerung noch eine Massenausgewogenheit des sich drehenden Vorrichtungsteiles aufweist, der sich aus mehreren längsaxigen mit den Wandungsteilen (18.1) aneinanderliegenden abgeschlossenen Tauchkammern (18) zusammensetzt, die ringartig um den zentrischen mit einer Kanalblende (20) in die Zu- und Abflußzone ("Z"), ("A") geteilten Durchflußkanal (19) situiert sind, eine Trommel bildend, die waagerecht zur Rotation kommt durch die abgestimmte mengenbeeinflußte Arbeit der Zufluß und Abflußventile (21), (21.1), welche die Tauchkammern (18) erfindungstreu einzeln mit dem Durchsatzgut "M" füllen und entleeren oder mittels Übergangsbrücken (22) in Verbundanordnung aber so, daß in keinem Fall Füllkörpereinheiten mitgetragen werden durch die Begrenzung mittels Füllkörper("QF") -Korbblenden (23), die mit entsprechendem Abstand zu den beiderseitigen Stirnwänden (18.1) der Tauchkammern (18) an deren Kammernwandung (18.1) angebracht sind, wie auch die Füllkörpermischflügel (24) und Füllkörperladelukendeckel (29), inklusive Entgasungsdom (26), wodurch eine Füllkörperfreizone entsteht, in welcher die Entgasungsschleuse (27) immer ungehindert schwimmend sich am Flüssigkeitsspiegel bewegt, um durch ihre elastische Verbindung mit dem Entgasungsring (25) beispielsweise freien Stickstoffaustritt zu gewähren, ohne Verlust denitrifizierten Wassers "M" oder der nitratübermengigen Input-Flüssigkeit ("M"), welche vorerst die mit einem Abdichtungsdeckel (29) verschlossene Reaktorwanne (1) bedarfsentsprechend füllt durch Funktion von Anschlußstutzen (4), Zuflußabsperrhahn (5) mit Schwimmer (6) und Zuflußdüse (3), wonach der an die Reaktorwanne (1) befestigte Drehzahlregler (7) des in vertikaler Gleitsitzarretierung (17.1) gehalterten trommelförmigen Tauchkammerblocks (18) zweckentsprechend effektiv wird und mit diesem der gekoppelte Mikro-Gleichstromgenerator (7.1), die elektro-magnetische Gangschaltung (7.2) mit digitaler Meß- und Regelautomatik (8), (8.1), (8.2), so wie der mit dieser synchronisierte Nährkraftträger-Mengenimplikator (9), wie auch die ähnlich befestigte Vakuumpumpe (14) mit Sauerstoffrückspeisung (15) im Raum vom Ausflußstutzen (10), wo auch der Stickstoffaustritt (11) , Rückstandfilter (13), UV-Strahler (16) und das Stopfbuchsengleitlager (17) sitzt, in welchem abgedichtet das Kanalendstück (10) des Durchflußkanals (19) drehbar sitzt wie auch die Ventilsteuerwalze (12).

2. Der hydro-dynamische Tauchkammern-Bioreaktor nach Anspruch 1 **gekennzeichnet durch** die Merkmale und deren Gemeinsamkeit, daß im Konstruktionsbeispiel alternativ die Drehzahlregler-Bremskraft zu autarker Energieerzeugung genutzt wird, indem der Drehzahlregler (7) mit gekoppeltem Mikro-Gleichstromgenerator (7.1.), elektromagnetischer Gangschaltung (7.2), digitaler Meß- und Regelautomatik (8.1), (8.2) ergänzt wird, sodaß diese Elemente und der Antrieb von Vakuumpumpe (14) sowie vom Nhärstoffmengenimplikator (9), auf elektrotechnischer Basis beruhen können, wie auch ein UV-Strahler (16) dabei ohne Externe Stromversorgung arbeiten kann.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-8 605 770 (ISINÖÖRITOIMISTO LUJARI OY) <br> * Seite 2, letzter Absatz - Seite 3, Absatz 2; Seite 3, letzter Absatz - Seite 5, Absatz 2; Seite 6, im zweiten Absatz, Zeilen 1-15 * <br> --- | 1 | C 02 F 3/08 |
| A | DE-A-3 208 173 (V. STENGELIN) <br> * Seite 1, Ansprüche 1,4,5,6 * <br> ----- | 1,2 | |
| | | | **RECHERCHIERTE SACHGEBIETE (Int. Cl.5)** |
| | | | C 02 F |

Der vorliegende Recherchenbericht wurde für alle Patentansprüche erstellt

| Recherchenort | Abschlußdatum der Recherche | Prüfer |
|---|---|---|
| DEN HAAG | 08-05-1990 | TEPLY J. |